# EUROPEAN PATENT APPLICATION

(11) **EP 0 872 730 A1**
(43) Date of publication of application: **21.10.1998**
(21) Application number: 98106962.8
(22) Date of filing: 16.04.1998
(51) Int. Cl.: G01N 27/407

(54) **Solid-electrolyte thick-film laminated type CO sensor**

(30) Priority: 16.04.1997 JP 98616/97
(71) Applicant: TOKYO GAS CO., LTD., Minato-ku, Tokyo 105-0022 (JP); YAZAKI CORPORATION, Minato-ku, Tokyo 108 (JP)
(72) Inventor: Kawano, Takashi, Urawa-shi, Saitama 338-0832 (JP); Sorita, Ryoji, Hiratsuka-shi, Kanagawa, 254-0036 (JP); Mochizuki, Kei, Tenryu Shizuoka, 431-3393 (JP); Takashima, Hiromasa, Tenryu Shizuoka, 431-3393 (JP)
(74) Representative: TER MEER STEINMEISTER & PARTNER GbR

(57) **Abstract**

In a solid-electrolyte CO sensor mounted on a combustor of a fossil fuel for sensing the carbon monoxide (CO) quantitatively generated at the time of incomplete combustion of the combustor, the CO selectivity of the sensitivity under existence of hydrogen which is a disturbance gas has been improved greatly, thereby improving the sensing accuracy of CO, and by reducing the size and the interelectrode resistance of the sensor element, the cost of the sensor could be reduced. The laminated type sensor element is formed by contacting one pair of electrodes (a, b) to each of a front surface and a back surface of an oxygen ionic conductive solid-electrolyte thick-film (c) having a thickness of 10 µm, and covering one of the two electrodes by a combustible gas oxidation catalyst layer (d) or an electrical insulating oxide layer (d'), further mounting a heater (f) on the outer surface of said cover directly or through a densified alumina film (e).

## Description

### BACKGROUND OF THE INVENTION

The present invention relates to a solid-electrolyte type CO sensor to be mounted on a combustor of a fossil fuel such as petroleum crack gas or natural gas, for sensing the carbon monoxide (CO) quantitatively and by a high accuracy with advantageous selectivity, which occurs when an incomplete combustion happens at the combustor.

As a sensor for sensing the CO existing in the atmosphere, or the CO existing in a fuel gas inside a combustor or a combustion exhaust gas, a CO sensor utilizing oxygen ionic conductive solid-electrolyte has long been known.

For example, Japanese Patent Publication No.58-4985 discloses a CO sensor of a type utilizing a thin-plate of yttria stabilized zirconia (YSZ) as the solid-electrolyte which is gained by stabilizing zirconia (ZrO₂) by yttria (Y₂O₃), covering one of a pair of electrodes by a catalyst for oxidizing combustible gas, leaving the surface of the other electrode exposed, wherein said pair of electrodes are arranged and adhered to the same surface of said YSZ plate (for convenience, this type is called the plate type), and a type wherein said pair of electrodes are adhered separately to a different surface (that is, the front surface and the back surface) of the YSZ plate (for convenience, this type is called the laminated type, and this term will be used in the present specification). The Publication indicates that this CO sensor could sense the CO in the air.

However, in the fuel gas comprising hydrocarbon as its main component such as natural gas or petroleum crack gas, there not only exists a considerable amount of hydrogen (H₂), but at the time of incomplete combustion of hydrocarbon system gas, H₂ is generated together with CO, and the generation ratio at the time of combustion of the two components will change according to the combustion load, so in order to sense the CO concentration quantitatively and with high accuracy, not only is it necessary for the sensor to have high sensitivity against CO, but it is also necessary to have a remarkable sensitivity against CO compared to the sensitivity against H₂ which is a disturbance gas against sensing CO (this is called the CO selectivity of the sensor performance).

There is no clear indication regarding this CO selectivity in said prior art reference, but according to the experiment performed by the inventors of the present invention, the H₂ sensitivity greatly exceeds the CO sensitivity, so it is not suitable for quantitatively sensing CO at the time of incomplete combustion.

As an art for improving the CO selectivity of the sensor performance, Japanese Laid-Open Patent Publication No. 61-194348 discloses a plate type CO sensor comprising one of a pair of electrodes being covered by a catalyst layer which oxidizes combustible gas including CO (for example, an Alumina-Supported Pt catalyst and the like), and the other one of said pair of electrodes being covered by a catalyst layer which only oxidizes combustible gas except for CO (for example, tin oxide catalyst and the like). In this technique, the forming of said electrodes or said catalyst layers are carried out by a thick-film printing of a pasted electrode material on the same surface of the YSZ plate having a size of 4mm× 8mm with a thickness of 0.8mm, or a catalyst layer of 3mm× 3mm with a thickness of 20 µm, which means that a paste of different materials must be printed repeatedly for plural times on the same surface and at a position very close to each other. Therefore, the manufacturing steps will become complex, and the manufacturing cost will be raised. Further, there is a limit in bringing the two electrodes closer, so it is difficult to reduce the interelectrode resistance.

The above-mentioned problems regarding the complication of the manufacturing method of the sensor element is solved by Japanese Laid-Open Patent Publication No. 7-306175 disclosing a plate type CO sensor comprising a pair of electrodes having a size of approximately 1mm×1mm positioned on a same surface of the YSZ plate and being separated by a distance of 0.3mm in between, and having only one of the pair of electrodes being covered by an improved oxidation catalyst layer.

However, the CO sensor formed by said technique has a sensitivity against H₂ which is more than double the sensitivity against CO. Therefore, the sensor quantifies CO by sensing H₂ under assumption that H₂ will occur approximately the same amount as CO at the time of incomplete combustion. Further, it is difficult to reduce the space between the two electrodes by the current printing technique, but when a wide space exists between the electrodes, there is a problem that the interelectrode resistance becomes large. In order to accurately measure the sensor output in such a state, the current being flown in the sensor output measurement circuit must be reduced, and therefore the input impedance for said circuit must be large, which means that it is difficult to reduce the manufacturing cost of the whole sensor.

### SUMMARY OF THE INVENTION

The present invention aims at providing a CO sensor having a CO sensitivity which is far greater than its H₂ sensitivity, so that the CO concentration could be quantified directly and accurately, by an advantageously reduced manufacturing cost.

The present inventors studied the structure of the plate type or the laminated type CO sensors regarding the improvement of CO sensitivity in a solid-electrolyte CO sensor, and completed the present invention by using an electrolyte thick-film with a thickness of approximately 10 µm instead of the prior solid-electrolyte substrate called the green sheet with a thickness of approximately 0.3mm to 1mm.

The present invention comprises a pair of electrodes (a, b), each one formed to contact each of a front surface or a back surface of an oxygen ionic conductive solid-electrolyte thick-film (c), one of said pair of electrodes being covered by either a combustible gas oxidation catalyst layer (d) or an electrical insulating oxide layer (d'), further comprising a heater (f) mounted either directly or through a densified alumina film (e), on the outer covering surface of said oxidation catalyst layer (d) or said electrical insulating oxide layer (d').

### PREFERRED EMBODIMENT OF THE INVENTION

The CO sensor of the present invention comprises a pair of electrodes, one electrode formed to contact a front surface and another electrode formed to contact a back surface of a solid-electrolyte thick-film, ore of said pair of electrodes being covered by an oxidation catalyst layer or an oxide layer, which is of a lamination type with a basic structure of laminatinq four layers, an oxidation catalyst layer (d) or an oxide layer (d'), one of the pair of electrodes (b), a solid-electrolyte thick film (c), and the other one of said pair of electrodes (a) according to said order on a substrate with a heater (g).

The thickness of the solid-electrolyte thick-film (C) used in the present invention must be thinner than the plate known in the prior art as the green sheet, but a layer thickness which could be formed by printing a paste of solid-electrolyte is effective. The thickness of the film could be adjusted by controlling the particle ratio, the concentration or the viscosity of the solid-electrolyte which are performed generally in the present technical field. In the present invention, it is not necessary to numerically limit the thickness of the film specifically if it is in the range where the film is formed by screen printing of said paste, but as is disclosed in Claim 6, a film thickness of 1 to 50 µm is preferable.

As was disclosed above, in a plate type sensor, the space between the pair or electrodes is generally 300 µm, and reduced to approximately 100 µm at most, in order to prevent the occurrence of short of the electrodes, regarding the printing accuracy of the electrodes. In comparison, the present invention employs a laminated type sensor, forming a film of solid-electrolyte having a thickness of approximately 10 µm by a thick-film printing technique, thereby reducing the space between the pair of electrodes to approximately 10 µm which is equivalent to the thickness of the solid-electrolyte, realizing an advantageously small space between the electrodes, reducing the interelectrode resistance.

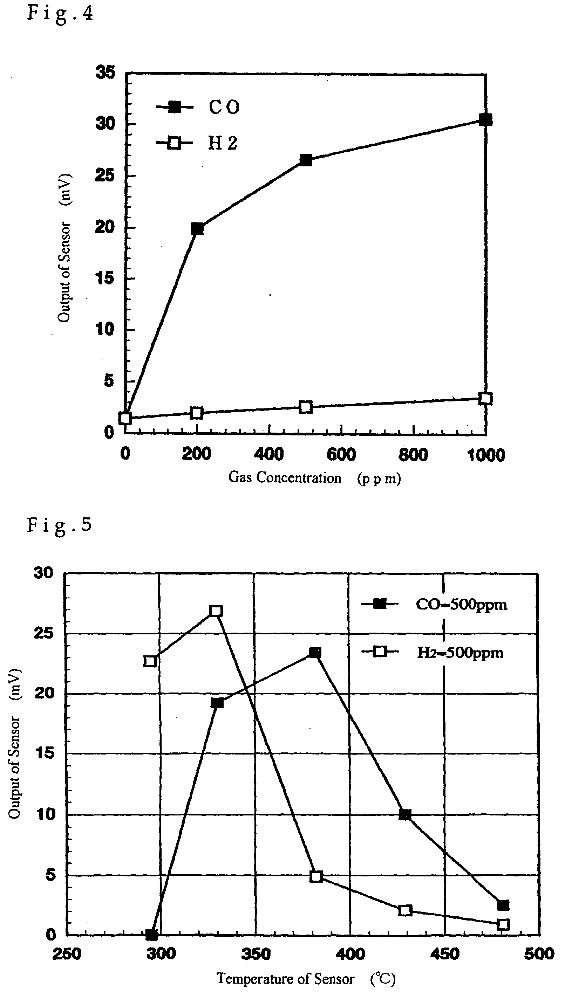

As a result, though the prior art plate type CO sensors showed more sensitivity against H₂ than CO, the present invention surprisingly showed a keen CO sensitivity, which exceeded approximately ten times the sensitivity against H₂ (refer to FIG. 4), enabling quantification by measuring the CO directly. The reason for this CO selectivity is not clear, but other than utilizing a solid-electrolyte thick-film (c) which his a greatly reduced thickness compared to the prior art plates, it could be assumed that the present sensor shows advantageous CO selectivity since temperature of the gas reaching the electrodes differ delicately at each electrode. The gas flowing through the conduit directly contacts the electrode (a) at its normal temperature, but on the other hand, the gas contacting said electrode (b) covered by the catalyst layer or the oxide layer is at a relatively high temperature, since the gas is heated when it passes through said catalyst layer or said oxide layer. The relationship between the sensor operating temperature, the CO sensitivity and the H₂ sensitivity is shown in FIG. 5.

The solid-electrolyte thick-film (c) utilized in the present invention is of an oxygen ionic conductive type, and the material includes all known oxygen ionic conductive solid-electrolyte in the present field of art, including zirconia stabilized by a rare-earth oxide such as yttria, zirconia added of MgO or CaO, thorium dioxide added of rare-earth oxide, cerium oxide added of rare-earth or CaO, bismuth trioxide added of SrO, and so on. In practice, YSZ is mainly utilized.

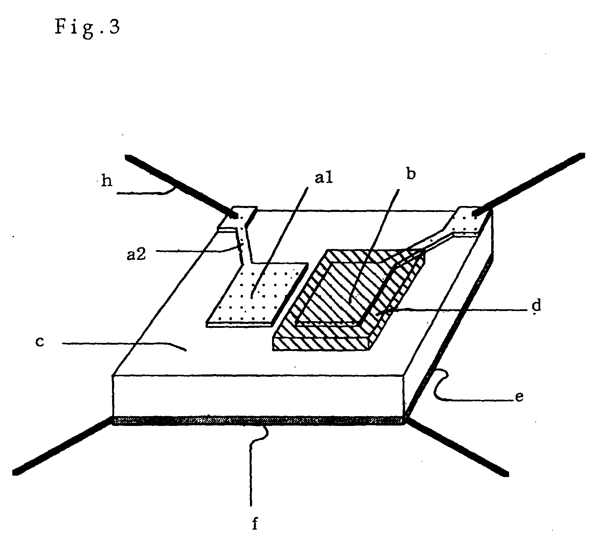

The electrodes (a, b) of the present invention could be formed so that the electrode plate and the electromotive force (sensor output) takeout terminal portion are formed by separate members or with different materials, but for the prevention of electromotive force loss at the contact point of the two portions and for the convenience of manufacturing, it is especially preferable to form the electrode plate portion (FIG. 3, reference a1) and the terminal portions (FIG. 3, reference a2) by the same material and as one unit.

As the material of the electrodes, a known electrode material in the present technical field could be used, such as rare-metal of gold, platinum and the like, a mixture of platinum metals and zirconia, thorium dioxide, cerium oxide, bismuth trioxide and the like, or the mixture of oxide having an additive of rare-earth oxide or alkaline-earth metal oxide to one of the said materials and a platinum metals, and the like. Especially, Pt-ZrO₂ or Pt-YSZ and the like are mainly used.

In the present invention, a known method is used for forming the electrodes (a, b) contacting to the front and back surfaces of the solid-electrolyte thick-film (c), but generally, a method is employed where the solid-electrolyte and the electrode material are formed in a paste state, printed to a shape having a predetermined size, and then sintered.

The oxidation catalyst used in the combustible gas oxidation catalyst layer (d) of the present invention could be CO, H₂, CH₄ and the like which operates as a catalyst oxidizing combustible gas. For example, a material known in the present technical field such as platinum metals like Pt and Pd, gold, oxide of main transition metal such as V and Cr, or the combination of two or more kinds of said and other materials could be used, and generally, these materials are supported on a known support such as SiO₂, α-Al₂O₃, γ-Al₂O₃ and the like. As a support, all material known in the present field of art could be used, but preferably, it is practical to use Pt supported on α-Al₂O₃.

As the oxide used in the electrical insulating oxide layer (d') of the present invention, it is possible to use any metal oxide showing electrical insulating characters, and generally, those used as material of ceramic are utilized. In practice, the material used as the support for said oxide catalyst is preferable from a manufacturing point of view. For example, one kind or a mixture of more than two kinds of material chosen from Al₂O₃, ZrO₂, CeO₂, SiO₂, Ga₂O₃ is used.

In the present invention, the covering of the one electrode (b) by the oxide catalyst layer (d) or the oxide layer (d') must be completely in a closed state, so that no combustible gas could reach the electrode (b) directly without contacting said catalyst or said oxide. However, there is no need to closely contact the electrode (b) and the catalyst layer (d) or the oxide layer (d'), and there may be a space in between said members. In order to completely cover the electrode (b) in a closed state by said catalyst layer or said oxide layer, the covering must be performed to an area which is somewhat wider than that of the electrode (b). A known method is used for the covering, and generally, the oxidation catalyst or the oxide is formed into a paste state, printed to a shape having a predetermined size, and then sintered to form a porous cover.

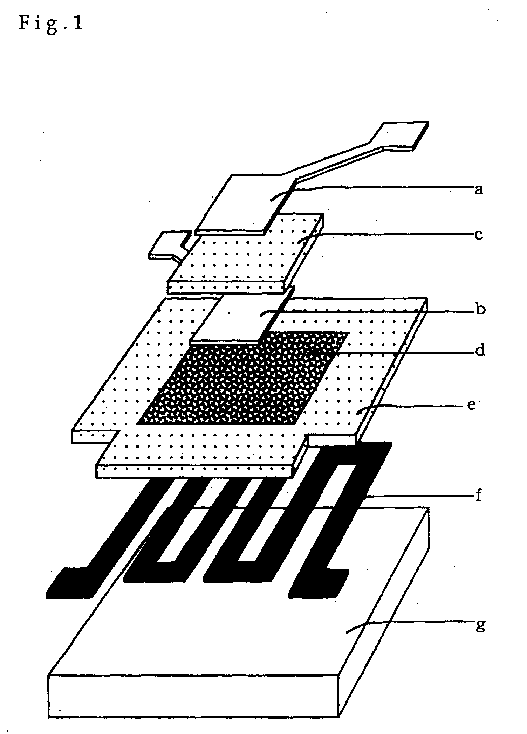

In order to secure the operation temperature of the laminated type CO sensor element of the present invention, generally, a heater is mounted to the element through an insulating body. The CO sensor of claim 3 (refer to FIG. 1) is formed so that said heater (f) contacts the oxidation catalyst layer (d) or the oxidation layer (d') of the laminated type sensor, but will not contact the surface of the solid-electrolyte thick-film positioned in the peripheral of said catalyst layer (d) or said oxide layer (d'), or the output take-out terminal portion of the electrode.

That is, the surface of the solid-electrolyte thick-film existing outside the edge of said catalyst layer (d) or said oxide layer (d') is insulated by a densified alumina film (e), and a ribbon-shaped heater (h) is positioned so that said alumina film (e) and said catalyst layer (d) or said oxide layer (d') are heated directly. In practice, as is shown in FIG. 1, the area of said solid-electrolyte thick-film (c) is formed somewhat larger than the area of the electrode plate (b), and the area of the catalyst layer (d) or the oxide layer (d') is formed even larger than said area of the solid-electrolyte thick-film (c) in order to provide a complete cover, positioning an insulating densified alumina film (e) on the outside of the edge of said catalyst layer (d) or said oxide layer (d'), and then heating said alumina film (e) and said catalyst layer (d) or said oxide layer (d') thoroughly. According to such structure, although the one side of the cover formed by said oxidation catalyst or said oxide is shut by the heater (f) and a supporting alumina substrate (g), the combustible gas could pass through the porous oxidation catalyst layer (d) or the porous oxide layer (d') where it is not covered by the densified alumina film (e) or the electrolyte thick-film, reaching the electrode plate (b).

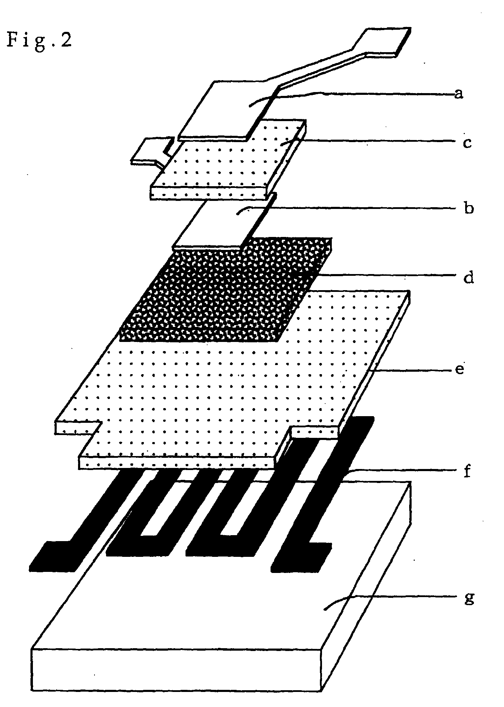

The CO sensor disclosed in claim 4 (FIG. 2) is formed so that the whole surface of the heater (f) is insulated by the densified alumina film (e), and on the back surface of said alumina film, that is, the surface which does not contact the heater (f), the oxidation catalyst layer (d) or the oxide layer (d') is mounted. That is, the heater (f) formed on the alumina substrate (g) which works as a supporting body is formed so as to thoroughly heat the oxidation catalyst layer (d) or the oxide layer (d') indirectly through said densified alumina film (e).

In order to explain the present invention in further detail, an example will be disclosed hereinafter. However, it should be noted that the present invention is not limited to such example. Hereinafter, the % will mean weight % if not especially noted, and the ppm of gas concentration is a volume standard, and the sensitivity of the CO sensor is explained by showing the output of the electromotive force of the sensor in mV.

### [Example 1]

### The manufacturing of the sensor:

According to FIG.1, the method of manufacturing the sensor element of the present invention is explained. On an alumina substrate (g) having a size of 3mm×4mm with a thickness of 0.3mm, a common Pt paste is printed in a ribbon shape, and then it is sintered to form a heater (f). On the upper surface thereof, a paste of α-Al2O3-Supported Pt catalyst formed to carry 5% of Pt is printed by a common method to a size of 3mm ×3mm with a film thickness of 30 µm, forming a combustible gas oxidation catalyst layer (d). On the outer peripheral portion thereof, a common alumina paste for insulation is printed, forming a densified alumina film (e), which is then sintered for 10 minutes under 1400°C so as to be contacted to the substrate (g).

Next, a shape of an electrode (b) is printed by an electrode material paste where an electrode plate having a size of 1.0mm ×1.0mm with a film thickness of 30 µm and a sensor output take-out terminal portion are formed as one unit so that the electrode plate portion is positioned on the center of the upper surface of said catalyst layer (d), which is then sintered for 10 minutes under 1300°C. The electrode material paste is formed by mixing a YSZ powder comprising 8mol% of Y₂O₃ and 92mol% of ZrO₂ and a Pt powder which are combined so that the weight ratio of Pt of the whole powder material is 90%, adding an appropriate amount of a common binder, solvent, and surface-active agent, and then mulling the same.

Further, the paste is printed accurately on the upper surface of said electrode plate member by a size of 1.4mm× 1.4mm with a film thickness of 30 µm so that the YSZ paste formed by a common method covers said electrode plate member completely. Then, said paste is dried for 30 minutes under 100°C, forming a solid-electrolyte thick-film (c). The YSZ paste is formed by mixing a YSZ powder of 100 weight portion comprising 8mol% of Y₂O₃ and 92mol% of ZrO₂, polyvinyl butyral of 9 weight portion as the binder, α-terpineol and dibutyl phthalate of 80 weight portion in total as the solvent, and a common surface-active agent of 3.5 weight portion, and then mulling the same.

Next, utilizing said electrode material paste, a unit-type electrode (a) having the same shape as said electrode (b) is printed on the upper surface of said YSZ film (c), and then it is sintered for 10 minutes under 1375°C. At this time, the paste is positioned so that the electrode plate portion will not hang out of the YSZ film, and that the sensor output take-out terminal portion will not overlap the same portion of said electrode (b).

Another example regarding the manufacturing of the sensor will now be explained. On an alumina substrate (g) having a size of 2mm×2mm with a thickness of 0.3mm, a Pt paste is printed, which is then sintered to form a heater (f). On the upper surface thereof, an α-alumina for electrical insulation is printed by screen printing to the whole surface excluding the corner of the substrate by an area of 0.4mm×0.4mm (terminal for heater connection and sensor output takeout), which is then sintered by a predetermined temperature. Next, an α-Alumina-Supported Pt catalyst paste supporting Pt by 5wt% is printed to have an octagonal shape and with a thickness of 30 µm, forming a combustible gas oxidation catalyst layer (d), which is dried for one hour under room temperature and one hour under 100°C.

Next, an electrode (b) is printed by an electrode material paste where an electrode having a diameter of 0.9mm with a thickness of 5 µm and a sensor output take-out terminal portion are formed as one unit so that the electrode is positioned on the center of the upper surface of said catalyst layer (d), which is then dried for one hour under room temperature and one hour under 100°C, which is further sintered for 10 minutes under 1300°C. The electrode material paste is the same as that of example 1.

Further, the YSZ paste is printed in a shape having a diameter of 1.2mm and a thickness of 10 µm so that the YSZ paste covers said electrode plate member completely, and that it is positioned on the center portion of the substrate. Then, said paste is dried for one hour under room temperature and one hour under 100°C, forming a solid-electrolyte film (c). The composition of the YSZ paste is the same as that of example 1.

Next, utilizing said electrode material paste, a unit-type electrode (a) having the same shape as said electrode is printed on the upper surface of said YSZ film (c), which is dried for one hour under room temperature and one hour under 100°C, and then sintered for 10 minutes under 1375°C. At this time, the paste is positioned so that the electrode portion will not hang out of the YSZ film, and that the sensor output take-out terminal portion will not overlap the same portion of said electrode (b).

### Assembly of the sensor:

Thereafter, a Pt lead wire (h) is connected to each of said two terminal portions, and lastly, they are assembled to a seat. An output take-out impedance conversion circuit, an output display circuit, and a heater control circuit is assembled thereto, forming the CO sensor.

### Gas sensing test:

The output of the sensor is measured by positioning said CO sensor inside a gas induction pipe, impressing a predetermined voltage to the heater, so as to maintain the operation temperature of the sensor to 400°C, changing the concentration of a mixed gas of air and CO, or air and H₂. The measured results are shown in FIG. 4. As could be seen from FIG. 4, the laminated type CO sensor of the present invention has a keen sensitivity (sensor output) against CO which is the object of the measurement, that is approximately 10 times the sensitivity to H₂. Further, according to the sensor of the present invention, the change in CO sensitivity and H₂ sensitivity was checked when the operation temperature is changed from 250°C to 550°C, the result of which is shown in FIG. 5. According to FIG. 5, it could be understood that the CO sensitivity exceeds the H₂ sensitivity at a temperature range from approximately 340°C to approximately 500°C, which means that this temperature range is preferable for the sensor manufactured according to example 1 of the present invention. However, the present invention is not limited to such range.

### [Example 2]

### Manufacture of the sensor element:

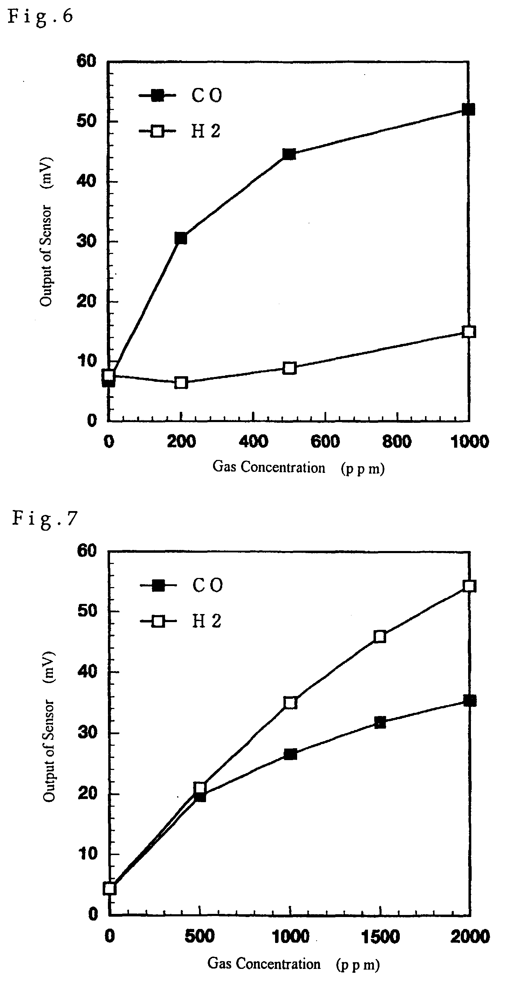

The same procedure disclosed in example 1 is performed so as to manufacture the sensor element of the present invention, except that α-Al₂O₃ is used instead of the α-Al2O3-Supported Pt catalyst used in example 1. The sensor device is assembled in the same manner as example 1, and the result of the gas sensing test performed by this sensor is shown in FIG. 6. It could be understood that the laminated type sensor of the present invention has a keen sensitivity against CO which is the object of the measurement that is five to six times keener compared to its sensitivity against H₂.

### [Comparative experiment 1]

Utilizing the same material as said example 1, a YSZ plate having a size of 3.0mm×4.0mm with a thickness of 0.3mm is formed, and on the same surface thereof, a pair of electrodes each having a size of 1.0mm×1.0mm are printed with a distance of 0.3mm in between, which is sintered for 10 minutes under 1400°C. Next, the same oxidation catalyst used in example 1 is printed on one of the electrodes to a size of 1.4mm×1.4mm with a film thickness of 60 µm, which is sintered for three hours under 900°C. Further, on the back surface of the YSZ plate, a heater (f) is formed with a densified alumina mounted in between. Then, according to the steps disclosed in example 1, a plate type CO sensor (FIG. 3) is manufactured. FIG. 7 shows the result of measuring the sensor output by this sensor utilizing the same gas as example 1 with the same concentration, and under the same condition. As is clear from FIG. 7, in the plate type sensor, opposite to the result of example 1, the sensitivity against H₂ is approximately 1.5 times keener compared to the sensitivity against CO, which is the object of measurement.

The CO sensor according to the present invention is a laminated type sensor having a pair of electrodes sandwiching a film of oxygen ionic conductive solid-electrolyte having a film thickness of approximately 10 µm, having a CO sensitivity which is approximately ten times keener compared to its H₂ sensitivity as a result, thereby realizing quantification of CO directly without receiving any influence from H₂.

The CO sensor of the present invention employs a laminated structure, thereby reducing the space between the electrodes to 10 µm which is approximately 1/10 to 1/30 of the prior art, which reduces the interelectrode resistance greatly compared to the prior art which had approximately 100 to 300 µm of space between the electrodes, thereby eliminating the need to form the output take-out impedance conversion circuit with a high-input impedance. Therefore, the cost of the sensor could be cut down.

## Claims

1. A CO sensor comprising:
an oxygen ionic conductive solid-electrolyte film;
a pair of electrodes each laminated on a front or a back surface of said oxygen ionic conductive solid-electrolyte film;
a combustible gas oxidation catalyst layer covering one electrode of said pair of electrodes;
an electrical insulating layer positioned proximate to said combustible gas oxidation catalyst layer;
an electric heater laminated on said electrical insulating layer; and
a substrate supporting the laminated body.

2. A CO sensor comprising:
an oxygen ionic conductive solid-electrolyte film;
a pair of electrodes each laminated on a front or a back surface of said oxygen ionic conductive solid-electrolyte film;
an electrical insulating oxide layer covering one electrode of said pair of electrodes;
an electric heater laminated on said electrical insulating oxide layer; and
a substrate supporting the laminated body.

3. The CO sensor according to claims 1 or 2 wherein said oxygen ionic conductive solid-electrolyte film is an yttria stabilized zirconia (YSZ) film.

4. The CO sensor according to claim 1 wherein said combustible gas oxidation catalyst layer is an alumina carrying platinum catalyst layer.

5. The CO sensor according to claim 2 wherein the oxide forming said electrical insulating oxide layer is either one or a mixture of more than two materials chosen from a group of Al₂O₃, ZrO₂, CeO₂, SiO₂ and Ga₂O₃.

6. The CO sensor according to claims 1 or 2 wherein the oxygen ionic conductive solid-electrolyte film is formed by a paste printing method, and the thickness of said film is in the range of 1 to 50 µm.
